# NEUE EUROPÄISCHE PATENTSCHRIFT

(11) **EP 2 773 808 B2**
(45) Veröffentlichungstag und Bekanntmachung des Hinweises auf die Entscheidung über den Einspruch: **01.04.2020**
(45) Hinweis auf die Patenterteilung: 05.10.2016
(21) Anmeldenummer: 12787396.6
(22) Anmeldetag: 26.10.2012
(51) Int. Cl.: D06M 15/564, B29D 29/08, B29B 15/12, F16G 1/10, F16G 1/28, F16G 5/08, F16G 5/20, F16G 1/16, F16G 5/06

(54) **VERFAHREN ZUR PRÄPARATION EINES ZUGTRÄGERS, INSBESONDERE CARBON-ZUGTRÄGERS, BEI DER FERTIGUNG EINES RIEMENS**
METHOD FOR PREPARING A TENSION MEMBER, IN PARTICULAR A CARBON TENSION MEMBER, IN THE PRODUCTION OF A BELT
PROCÉDÉ DE TRAITEMENT D'UNE CARCASSE, EN PARTICULIER D'UNE CARCASSE EN CARBONE, LORS DE LA FABRICATION D'UNE COURROIE

(30) Priorität: 02.11.2011 DE 102011054976
(43) Veröffentlichungstag der Anmeldung: 10.09.2014
(73) Patentinhaber: ContiTech Antriebssysteme GmbH, 30165 Hannover (DE)
(72) Erfinder: BROCKE, Stefen, 22143 Hamburg (DE); GÖSER, Hubert, 29451 Dannenberg (DE); KUCHARCZYK, Andrè, 29499 Gülden (DE)
(74) Vertreter: Preusser, Andrea
(86) Internationale Anmeldenummer: PCT/EP2012/071205
(87) Internationale Veröffentlichungsnummer: WO 2013/064424

(56) Entgegenhaltungen:
- EP-A1- 1 241 379
- EP-A2- 0 892 007
- EP-A2- 1 429 046
- WO-A1-2011/068729
- JP-A- 2005 248 356
- JP-A- 2010 276 175
- US-A- 4 711 792
- US-A1- 2009 227 406

## Beschreibung

Die Erfindung betrifft ein Verfahren zur Präparation eines Zugträgers bei der Fertigung eines Riemens, bestehend wenigstens aus:
- einem Riemenkörper aus einem polymeren Material mit elastischen Eigenschaften, umfassend eine Decklage als Riemenrücken und einen Unterbau mit einer Kraftübertragungszone; sowie
- einem in dem Riemenkörper eingebetteten Zugträger in Cordkonstruktion, wobei der Zugträger mit einem vernetzten Polymer präpariert ist, das einerseits eine mechanische Anbindung zum Zugträger und andererseits einen Haftverbund mit dem Riemenkörper eingeht.

Ein Riemen der oben genannten Art spielt insbesondere in der Antriebstechnik eine herausragende Rolle. Derartige Riemen, die auch als Antriebsriemen oder Kraftübertragungsriemen bezeichnet werden, können als Flachriemen, Keilriemen, Keilrippenriemen, Zahnriemen oder als Verbundseile ausgebildet sein. Die Kraftübertragungszone korrespondiert dabei mit dem Riementrieb. Diesbezüglich wird insbesondere auf folgende Patentliteratur verwiesen: DE 38 23 157 A1, DE 100 16 351 A1, DE 10 2006 007 509 A1, DE 10 2007 062 285 A1, DE 10 2008 012 044 A1,
DE 10 2009 044 153 A1, EP 0 841 500 A2, WO 2005/080821 A1, WO 2006/066669 A1,
WO 2011/068729 A1, US 3 981 206, US 5 417 618 und US 6 491 598.

Darüber hinaus ist es bekannt, Riemen zur Förderung von Materialien einzusetzen, wobei derartige Riemen auch als Transportbänder oder Fördergurte bezeichnet werden. Die Decklage als Riemenrücken wäre dann hier die tragseitige Deckplatte für das Fördermaterial. Der Unterbau wäre dann wiederum die laufseitige Deckplatte, die Kontakt mit einer Antriebstrommel hat.

Die Elastizität eines Riemens wird dadurch erreicht, dass der Riemenkörper und somit die Decklage und der Unterbau aus einem polymeren Material mit elastischen Eigenschaften bestehen, wobei hier insbesondere die beiden Materialgruppen Elastomere und thermoplastische Elastomere zu nennen sind. Von besonderer Bedeutung sind Elastomere auf der Basis einer vernetzten Kautschukmischung, enthaltend wenigstens eine Kautschukkomponente und Mischungsingredienzien. Als Kautschukkomponente wird insbesondere Ethylen-Propylen-Kautschuk (EPM), Ethylen-Propylen-Dien-Kautschuk (EPDM), (teil)hydrierter Nitrilkautschuk (HNBR), Fluor-Kautschuk (FKM), Naturkautschuk (NR), Chloropren-Kautschuk (CR), Styrol-Butadien-Kautschuk (SBR), Butadien-Kautschuk (BR) oder Polyurethan (PU) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei HNBR, EPM, EPDM, PU oder ein EPM/EPDM-Verschnitt. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern zwecks Verstärkung und Farbpigmente. Diesbezüglich wird auf den allgemeinen Stand der Kautschukmischungstechnologie verwiesen.

Der Riemen ist mit einem eingebetteten Zugträger versehen, der aus wenigstens einem in Riemenlängsrichtung verlaufenden Zugstrang gebildet ist. Zumeist bilden mehrere Zugstränge eine Zugträgerlage. Von besonderer Bedeutung ist dabei ein Zugstrang in Cordkonstruktion, wobei es diesbezüglich nach dem Stand der Technik verschiedene Werkstoffkonzeptionen gibt. Die wesentlichen Werkstofftypen sind: Stahl, Polyamid (PA), Aramid, Polyester, Carbon (Kohle), Basalt, Polyetheretherketon (PEEK), Polyethylentherephthalat (PET), Polybenzoxazol (PBO) oder Polyethylen-2,6-naphthalat (PEN).

Insbesondere die Kraftübertragungszone eines Riemens für die Antriebstechnik wird mit einer abriebfesten Beschichtung versehen, die zusätzlich zur Geräuschreduzierung dient und zudem noch ölbeständig ausgerüstet sein kann. Eingesetzt wird dabei eine Flockauflage, insbesondere in Form eines Baumwoll- oder Aramidflocks, eine dünne mit Fasern (z.B. Aramidfasern) gefüllte elastische Polymerschicht, eine Textilauflage, insbesondere in Form eines Gewebes, Gewirkes oder Gestrickes, oder eine Folie (z.B. PTFE-Folie) oder ein Folienverbund (z.B. PA-PTFE-Folie). Von besonderer Bedeutung ist das Gewebe. Die hier genannten Beschichtungen werden auf der Kontaktseite zum Riemenkörper, insbesondere zu dessen Unterbau, zumeist haftfreundlich präpariert, beispielsweise mit einem Resorcin-Formaldehyd-Latex (RFL).

Im Folgenden wird nun auf den Stand der Technik der Polyurethan-Präparation des Zugträgers näher eingegangen.
- In der Offenlegungsschrift EP 0 841 500 A2 wird ein Zahnriemen vorgestellt, bei dem der Riemenkörper aus einem gegossenen Polyurethan besteht. Der eingebettete Zugträger in Cordkonstruktion ist aus Carbon-Fasern gebildet, verbunden mit einer Cordbearbeitung. Beim Gießen des Riemens wird dabei nur ein Teil der Zugträgerhohlräume mit der Polyurethangießmasse ausgefüllt. Nachteilig ist, dass eine derartige Präparation des Zugträgers mit Polyurethan voraussetzt, dass der Riemenkörper ebenfalls aus einem Polyurethan der gleichen Zusammensetzung besteht. Es wird also keine Rücksicht genommen auf die unterschiedlichen Eigenschaften des Carbon-Zugträgers und des Riemenkörpers.
- Aus der Offenlegungsschrift WO 2011/068729 A1 ist nun ein Riemen, insbesondere ein Zahnriemen und Keilrippenriemen, bekannt, dessen Zugträger in Cordkonstruktion, insbesondere Carbon-Zugträger, mit einem vernetzten Polyurethan präpariert ist. Der Füllungsgrad der Zugträgerhohlräume mit dem vernetzten Polyurethan beträgt vorzugsweise 20 % bis 100 %. Bei der Bildung des Polyurethans werden ferner insbesondere folgende Komponenten A und B eingesetzt:
   - Komponente A:: Polyole der Gruppen Polyester-Polyole, Polycarbonat-Polyole und Polyether-Polyole;
   - Komponente B:: Diisocyanate, insbesondere Para-Phenylen-Diisocyanat und 4,4'-Methylen-Diphenyl-Diisocyanat.

Durch Reaktion eines Polyols mit einem Diisocyanat entsteht zunächst das Polyurethan-Präpolymer, verbunden mit einer anschließenden Vernetzung mit einem Diamin und/oder mit Wasser, insbesondere ausschließlich mit Wasser. In diesem Zusammenhang wird auch im Rahmen einer vorgeschalteten Verfahrensstufe ein Präparationsverfahren für den Zugträger vorgestellt, und zwar unter dem Gesichtspunkt eines "Zwei-Bäder-Konzeptes". In einem Gemisch aus einem Polyurethan-Präpolymer und einem inerten Lösungsmittel bzw. Dispergiermittel wird der Zugträger getränkt, verbunden mit einer zumindest teilweisen Füllung der Zugträgerhohlräume mit diesem Gemisch. Danach erfolgt eine Trocknung. Abschließend wird eine Vernetzung mit Wasser durchgeführt. Danach erfolgt die Produktion des Riemens mit dem auf diese Weise präparierten Zugträger.

Der Riemenkörper selbst kann aus einem anderen Material bestehen, wobei vorzugsweise ebenfalls ein vernetztes Polyurethan eingesetzt wird, das jedoch eine andere Zusammensetzung als das Polyurethan für die Zugträgerpräparation aufweisen kann.

Im Rahmen einer Weiterentwicklung der Lehre gemäß WO 2011/068729 A1 besteht nun die Aufgabe der Erfindung darin, ein Verfahren zur Präparation eines Zugträgers bei der Fertigung eines Riemens bereitzustellen, das eine reproduzierbare Polymerfüllung der Zugträgerhohlräume garantiert und damit eine Prozesssicherheit gewährleistet. Ferner soll mit diesem Verfahren eine gleichmäßige Benetzung aller Zugträgerfasern, auch der innersten Zugträgerfasern, realisiert werden.

Gelöst wird diese Aufgabe durch die Verfahrensvarianten I oder II, die im Folgenden näher vorgestellt werden.

### - Verfahrensvariante I

Im Rahmen einer vorgeschalten Verfahrensstufe der Riemenfertigung wird in einer einzigen Präparationsstufe der Zugträger mit einer Gesamt-Präparationsmischung, bestehend wenigstens aus einem Polyurethan-Präpolymer, einem Vernetzer, wobei das Präpolymer mittels eines Butandiols vernetzt wird, und einem inerten Lösungsmittel oder Dispergiermittel, benetzt, wobei die Gesamt-Präparationsmischung wenigstens einen Teil der Zugträgerhohlräume ausfüllt, verbunden mit einer anschließenden Trocknung des präparierten Zugträgers.

Während die Gesamt-Präparationsmischung in die Zugträgerhohlräume eindringt, findet je nach den Bedingungen (z.B. Konzentration, Temperatur) bereits eine beginnende Vernetzung statt, wobei zumeist im Rahmen der anschließenden Trocknung eine weitere Vernetzung (Ausvernetzung) erfolgt.

### - Verfahrensvariante II

Im Rahmen einer ebenfalls vorgeschalteten Verfahrensstufe der Riemenfertigung wird in wenigstens zwei Präparationsstufen der Zugträger mit jeweils einer Gesamt-Präparationsmischung, bestehend wenigstens aus einem Polyurethan-Präpolymer, einem Vernetzer, wobei das Präpolymer mittels eines Butandiols vernetzt wird, und einem inerten Lösungsmittel oder Dispergiermittel, benetzt, wobei die jeweilige Gesamt-Präparationsmischung wenigstens einen Teil der Zugträgerhohlräume ausfüllt, verbunden mit einer anschließenden Trocknung des präparierten Zugträgers.

Bei jeder Präparationsstufe kann die gleiche Gesamt-Präparationsmischung eingesetzt werden.

Besonders vorteilhaft ist es, wenn bei jeder Präparationsstufe eine andere Gesamt-Präparationsmischung eingesetzt wird. Durch unterschiedliche Präparationsgemische kann nämlich die Benetzung weiter optimiert werden. Vor allem kann mit dieser Verfahrensvariante der Füllgrad weiter erhöht werden, falls dies nicht mittels Lösemittelkonzentrationen erreicht werden kann.

Darüber hinaus kann zwischen jeder Präparationsstufe eine Trocknung durchgeführt werden.

Hinsichtlich des Vernetzungsablaufs beim Füllvorgang und bei der Trocknung wird auf die Verfahrensvariante I verwiesen.

Bei beiden Verfahrensvarianten I und II, die sich von der Präparationslehre gemäß der Offenlegungsschrift WO 2011/068729 A1 unterscheiden, sind folgende verfahrenstechnische Gestaltungsmaßnahmen vorteilhaft:
- Die Benetzung des Zugträgers wird so durchgeführt, dass nach der Trocknung wenigstens 20 %, insbesondere wenigstens 30 %, der Zugträgerhohlräume mit dem vernetzten Polymer ausgefüllt sind. Auch ein 100 %-iger Füllungsgrad ist möglich, insbesondere nach der Verfahrensvariante II.
- Das Präpolymer wird mittels 1,4-Butandiol vernetzt.
- Als Präpolymer wird erfindungsgemäß ein Polyurethan-Präpolymer eingesetzt, wobei hier beispielsweise auf die Polyole und Diisocyanate, die in der Offenlegungsschrift WO 2011/068729 A1 vorgestellt werden, zurückgegriffen werden kann.
- Vor, insbesondere direkt vor Beginn der Präparation des Zugträgers werden die einzelnen Komponenten der Gesamt-Präparationsmischung zunächst unabhängig voneinander jeweils in einem Lösungsmittel oder Dispergiermittel, das gleich (z.B. Toluol) oder verschieden (z.B. Toluol, Xylol) sein kann, gelöst bzw. dispergiert, die dann bei beginnender Präparation des Zugträgers unter Bildung einer noch niedrigviskosen Gesamt-Präparationsmischung zusammengeführt werden. Dieses noch niedrigviskose Gemisch kann gleichmäßig tief in das Faserbündel eindringen. Dadurch wird gewährleistet, dass jedes Filament im Querschnitt des Cordes benetzt wird. Ferner wird die chemische Reaktion der Komponenten durch das Lösungsmittel bzw.

Dispergiermittel gehemmt. Beim anschließenden Trockenprozess unter Verdampfen des Lösungsmittels bzw. Dispergiermittels beginnt zumeist der eigentliche Start der Reaktion.
- Es wird ein Zugträger aus Carbon-Fasern, Glas-Fasern, Aramid-Fasern oder Basalt-Fasern präpariert. Bei den Aramid-Fasern können Para-Aramid oder Meta-Aramid verwendet werden.

Von besonderer Bedeutung ist jedoch die Zugträgerbildung aus Carbon-Fasern.
- Die Eindringtiefe und Menge des Füllmaterials kann ferner durch folgende Parameter beeinflusst werden:
   Viskosität der Gesamt-Präparationsmischung;
   Mischungsverhältnis von Lösungsmittel/Dispergiermittel zu den Komponenten;
   Temperatur;
   Druck;
   Verweildauer;
   Anzahl der Präparationsstufen (Tauchgänge) bei der Verfahrensvariante II.

Mit dem nach beiden Verfahrensvarianten I und II präparierten Zugträger wird dann die Riemenfertigung vorgenommen. Ansonsten wird hinsichtlich der Riemenfertigung beispielsweise auf den eingangs zitierten Stand der Riementechnologie verwiesen.

Die Erfindung wird nun anhand eines Ausführungsbeispiels unter Bezugnahme auf schematische Zeichnungen näher erläutert. Es zeigen:
- Fig. 1: einen Zahnriemen mit einem nach der Verfahrensvariante I oder II PU-präparierten Zugträger;
- Fig. 2: eine Litze, gebildet aus Filamenten als Basis einer Cordkonstruktion.

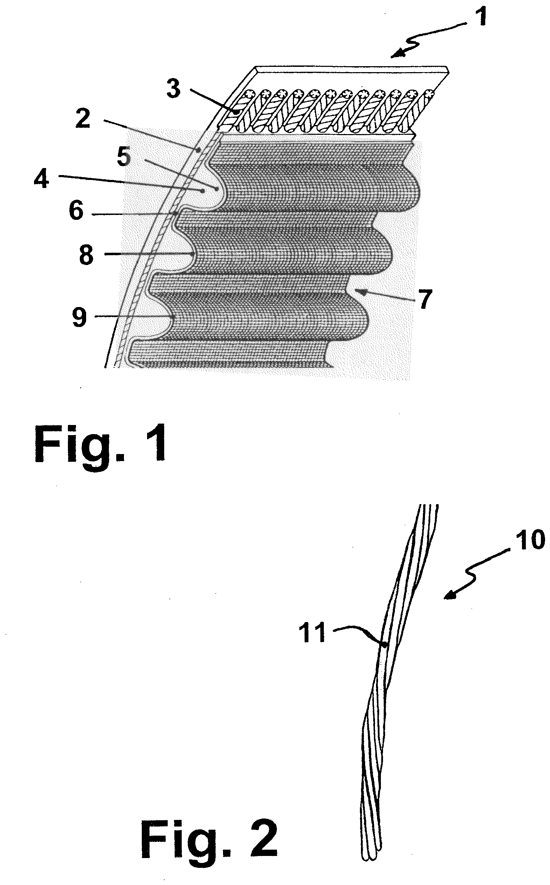

Fig. 1 zeigt einen Riemen 1 in Form eines Zahnriemens mit einer Decklage 2 als Riemenrücken, einem eingebetteten Zugträger 3 mit mehreren in Riemenlängsrichtung parallel verlaufenden Zugsträngen sowie einem Unterbau 4. Der Unterbau ist mit einer zahnförmigen Profilierung, umfassend Zähne 5 und Zahnstege 6, versehen und umfasst die Kraftübertragungszone 7.

Die Decklage 2 und der Unterbau 4 bilden dabei als Gesamteinheit den Riemenkörper aus einem polymeren Werkstoff mit elastischen Eigenschaften. Hinsichtlich der bevorzugten diesbezüglichen Materialbasis wird auf die Beschreibungseinleitung zum Stand der Technik verwiesen. Von besonderer Bedeutung ist dabei der Einsatz von vernetztem Polyurethan.

Der Zugträger 3 in Cordkonstruktion ist insbesondere aus Carbon-Fasern gebildet, wobei der Zugträger mit einem vernetzten Polyurethan präpariert ist, was in Verbindung mit Fig. 2 noch näher erläutert wird.

Die Kraftübertragungszone 7 des Riemens ist besonders verschleißanfällig durch Abrieb, Hitze und den Einfluss durch Öle. Aus diesem Grunde wird die Kraftübertragungszone zumeist mit einer Textilauflage 8, beispielsweise in Form eines Gewebes, versehen. Diese Textilauflage wird beispielsweise nach der Lehre des Dokumentes WO 2005/080821 A1 zusätzlich mit einem fluorhaltigen Kunststoff, der insbesondere Polytetrafluorethylen (PTFE) ist, getränkt, und zwar bei einem hohen Füllungsgrad des Kunststoffes, wobei gleichzeitig eine Polymerbeschichtung (Versiegelung) als zusätzliche ölbeständige Schutzschicht 9 gebildet wird. Die beiden Teilschichten 8 und 9 mit unterschiedlichen Funktionen treten hier als gemeinsame Schutzschicht auf.

Auch die Decklage 2 des Riemens 1 kann mit einer Textilauflage versehen werden, beispielsweise in der oben beschriebenen Art.

Der Riemen 1 in seiner besonderen Ausführung als Zahnriemen ist besonders dafür geeignet, eine Ölpumpe eines Motors, beispielsweise eines KFZ-Motors, anzutreiben.

Fig. 2 zeigt eine Litze 10, gebildet aus einer Gruppe von Filamenten 11, wobei 100 bis 1000 Filamente, insbesondere 500 bis 700 Filamente, eine Litze bilden. Die Litze liegt dabei zumeist als Litzenhelix vor, was in der Fig. 2 verdeutlicht wird. Eine Gruppe von Litzen bildet schließlich den Cord. Zumeist besteht ein Cord aus wenigstens fünf Litzen, insbesondere aus 10 bis 20 Litzen.

Die Filamente 11 sind aus einem Fasermaterial gebildet, insbesondere aus Carbon-Fasern. Man spricht in diesem Zusammenhang auch von Faserfilamenten.

Die gesamte Cordkonstruktion, umfassend das Gesamtsystem von Fasern, Filamenten und Litzen, beinhaltet Hohlräume, nämlich innerhalb der Fasern sowie zwischen den Filamenten und Litzen, die nun im Rahmen der Präparation mit dem vernetzten Polyurethan zumindest teilweise ausgefüllt werden, wobei das Füllmaterial einerseits eine sehr gute mechanische Anbindung zu den Faserfilamenten und somit zum Zugträger und anderseits eine sehr gute chemische Anbindung zum Riemenkörper aufweist.

### Bezugszeichenliste

### (Teil der Beschreibung)

- 1: Riemen in Form eines Zahnriemens
- 2: Decklage als Riemenrücken
- 3: Zugträger
- 4: Unterbau
- 5: Zahn
- 6: Zahnsteg
- 7: Kraftübertragungszone
- 8: Textilauflage (Zahnauflage)
- 9: Schutzschicht
- 10: Litze
- 11: Filament

## Patentansprüche

1. Verfahren zur Präparation eines Zugträgers (3) bei der Fertigung eines Riemens (1), bestehend wenigstens aus:
- einem Riemenkörper aus einem polymeren Material mit elastischen Eigenschaften, umfassend eine Decklage (2) als Riemenrücken und einen Unterbau (4) mit einer Kraftübertragungszone (7); sowie
- einem in dem Riemenkörper eingebetteten Zugträger (3) in Cordkonstruktion, wobei der Zugträger mit einem vernetzten Polymer präpariert ist, das einerseits eine mechanische Anbindung zum Zugträger und andererseits einen Haftverbund mit dem Riemenkörper eingeht;
**dadurch gekennzeichnet, dass** im Rahmen einer vorgeschalteten Verfahrensstufe der Riemenfertigung in einer einzigen Präparationsstufe der Zugträger (3) mit einer Gesamt-Präparationsmischung, bestehend wenigstens aus einem Polyurethan-Präpolymer, einem Vernetzer, wobei das Präpolymer mittels eines Butandiols vernetzt wird, und einem inerten Lösungsmittel oder Dispergiermittel, benetzt wird, wobei die Gesamt-Präparationsmischung wenigstens einen Teil der Zugträgerhohlräume ausfüllt, verbunden mit einer anschließenden Trocknung des präparierten Zugträgers (3).

2. Verfahren zur Präparation eines Zugträgers (3) bei der Fertigung eines Riemens (1), bestehend wenigstens aus:
- einem Riemenkörper aus einem polymeren Material mit elastischen Eigenschaften, umfassend eine Decklage (2) als Riemenrücken und einen Unterbau (4) mit einer Kraftübertragungszone (7); sowie
- einem in dem Riemenkörper eingebetteten Zugträger (3) in Cordkonstruktion, wobei der Zugträger mit einem vernetzten Polymer präpariert ist, das einerseits eine mechanische Anbindung zum Zugträger und andererseits einen Haftverbund mit dem Riemenkörper eingeht;
**dadurch gekennzeichnet, dass** im Rahmen einer vorgeschalteten Verfahrensstufe der Riemenfertigung in wenigstens zwei Präparationsstufen der Zugträger (3) mit jeweils einer Gesamt-Präparationsmischung, bestehend wenigstens aus einem Polyurethan-Präpolymer, einem Vernetzer, wobei das Präpolymer mittels eines Butandiols vernetzt wird, und einem inerten Lösungsmittel oder Dispergiermittel, benetzt wird, wobei die jeweilige Gesamt-Präparationsmischung wenigstens einen Teil der Zugträgerhohlräume ausfüllt, verbunden mit einer anschließenden Trocknung des präparierten Zugträgers (3).

3. Verfahren nach Anspruch 2, **dadurch gekennzeichnet, dass** bei jeder Präparationsstufe die gleiche Gesamt-Präparationsmischung oder eine andere Gesamt-Präparationsmischung eingesetzt wird.

4. Verfahren nach einem der Ansprüche 2 bis 3, **dadurch gekennzeichnet, dass** zwischen jeder Präparationsstufe eine Trocknung durchgeführt wird.

5. Verfahren nach einem der Ansprüche 1 bis 4, **dadurch gekennzeichnet, dass** die Benetzung des Zugträgers (3) so durchgeführt wird, dass nach der Trocknung wenigstens 20 % der Zugträgerhohlräume mit dem vernetzten Polymer ausgefüllt sind.

6. Verfahren nach einem der Ansprüche 1 bis 5, **dadurch gekennzeichnet, dass** vor Beginn der Präparation des Zugträgers (3) die einzelnen Komponenten der Gesamt-Präparationsmischung zunächst unabhängig voneinander jeweils in einem Lösungsmittel oder Dispergiermittel, das gleich oder verschieden sein kann, gelöst bzw. dispergiert werden, die dann bei beginnender Präparation des Zugträgers (3) unter Bildung einer noch niedrigviskosen Gesamt-Präparationsmischung zusammengeführt werden.

7. Verfahren nach einem der Ansprüche 1 bis 6, **dadurch gekennzeichnet, dass** ein Zugträger (3) aus einem faserförmigen Material präpariert wird.

8. Verfahren nach Anspruch 7, **dadurch gekennzeichnet, dass** ein Zugträger (3) aus Carbon-Fasern, Glas-Fasern, Aramid-Fasern oder Basalt-Fasern präpariert wird.

9. Verfahren nach Anspruch 8, **dadurch gekennzeichnet, dass** ein Zugträger (3) aus Carbon-Fasern präpariert wird.

10. Verwendung eines präparierten Zugträgers (3), hergestellt nach einem der Ansprüche 1 bis 9, zur Fertigung eines Riemens (1) mit einem Riemenkörper aus einem vernetzen Polyurethan.

11. Verwendung eines präparierten Zugträgers (3), hergestellt nach einem der Ansprüche 1 bis 9, zur Fertigung eines Riemens (1) für die Antriebstechnik.

12. Verwendung eines präparierten Zugträgers (3) nach Anspruch 11 zur Fertigung eines Zahnriemens (1) oder Keilrippenriemens.

## Claims

1. Method of treating a tensile member (3) for fabricating a belt (1) consisting at least of:
- a belt body composed of a polymeric material having elastic properties and comprising a top ply (2) as belt backing and a substructure (4) having a power transmission zone (7); and also
- a tensile member (3) embedded in the belt body and being in cord construction, wherein the tensile member has been treated with a crosslinked polymer which forms both a mechanical attachment to the tensile member and an adherent bond with the belt body;
**characterized in that** the tensile member (3) is wetted with an overall treatment mixture consisting at least of a polyurethane prepolymer, a crosslinker, wherein a butane diol is used to crosslink the prepolymer, and an inert solvent or dispersant in a single treatment stage in the course of an upstream stage of the belt fabrication process, wherein the overall treatment mixture fills at least some of the tensile member voids, and the treated tensile member (3) is subsequently dried.

2. Method of treating a tensile member (3) for fabricating a belt (1) consisting at least of:
- a belt body composed of a polymeric material having elastic properties and comprising a top ply (2) as belt backing and a substructure (4) having a power transmission zone (7); and also
- a tensile member (3) embedded in the belt body and being in cord construction, wherein the tensile member has been treated with a crosslinked polymer which forms both a mechanical attachment to the tensile member and an adherent bond with the belt body;
**characterized in that** the tensile member (3) is wetted with an overall treatment mixture consisting at least of a polyurethane prepolymer, a crosslinker, wherein a butane diol is used to crosslink the prepolymer, and an inert solvent or dispersant in each of two or more treatment stages in the course of an upstream stage of the belt fabrication process, wherein each overall treatment mixture fills at least some of the tensile member voids, and the treated tensile member (3) is subsequently dried.

3. Method according to Claim 2, **characterized in that** each treatment stage employs the same overall treatment mixture or a different overall treatment mixture.

4. Method according to either of Claims 2 and 3, **characterized in that** a drying operation is performed between every treatment stage.

5. Method according to any of Claims 1 to 4, **characterized in that** the tensile member (3) is wetted such that, after drying, the crosslinked polymer fills at least 20% of the tensile member voids.

6. Method according to any of Claims 1 to 5, **characterized in that** before the treatment of the tensile member (3) is started the individual components of the overall treatment mixture are initially dissolved and/or dispersed independently of each other in a solvent or dispersant, which may be the same or different, and are then combined at the start of the treatment of the tensile member (3) to form a still low-viscosity overall treatment mixture.

7. Method according to any of Claims 1 to 6, **characterized in that** a tensile member (3) comprising a fibrous material is treated.

8. Method according to Claim 7, **characterized in that** a tensile member (3) comprising carbon fibers, glass fibers, aramid fibers or basalt fibers is treated.

9. Method according to Claim 8, **characterized in that** a tensile member (3) comprising carbon fibers is treated.

10. Use of a treated tensile member (3) obtained according to any of Claims 1 to 9 for fabricating a belt (1) having a belt body comprising a crosslinked polyurethane.

11. Use of a treated tensile member (3) obtained according to any of Claims 1 to 9 for fabricating a belt (1) for drive technology.

12. Use of a treated tensile member (3) according to Claim 11 for fabricating a toothed belt (1) or a V-ribbed belt.

## Revendications

1. Procédé pour la préparation d'un tirant (3) lors de la fabrication d'une courroie (1), au moins constituée par :
- un corps de courroie en un matériau polymère doté de propriétés élastiques, comprenant une couche de recouvrement (2) comme dos de courroie et une base (4) présentant une zone de transfert de force (7) ; ainsi que
- un tirant (3) en construction de type corde, intégré dans le corps de courroie, le tirant étant préparé à l'aide d'un polymère réticulé, qui participe d'une part à une liaison mécanique avec le tirant et d'autre part à un assemblage adhésif avec le corps de courroie ;
**caractérisé en ce que** dans le cadre d'une étape de procédé, disposée en amont, de la fabrication de la courroie, dans une seule étape de préparation, le tirant (3) est mouillé par un mélange global de préparation, constitué par au moins un prépolymère de polyuréthane, un réticulant, le prépolymère étant réticulé au moyen d'un butanediol, et un solvant ou un dispersant inerte, le mélange global de préparation remplissant au moins une partie des espaces creux du tirant, le mouillage étant associé à un séchage consécutif du tirant (3) préparé.

2. Procédé pour la préparation d'un tirant (3) lors de la fabrication d'une courroie (1), au moins constituée par :
- un corps de courroie en un matériau polymère doté de propriétés élastiques, comprenant une couche de recouvrement (2) comme dos de courroie et une base (4) présentant une zone de transfert de force (7) ; ainsi que
- un tirant (3) en construction de type corde, intégré dans le corps de courroie, le tirant étant préparé à l'aide d'un polymère réticulé, qui participe d'une part à une liaison mécanique avec le tirant et d'autre part à un assemblage adhésif avec le corps de courroie ;
**caractérisé en ce que** dans le cadre d'une étape de procédé, disposée en amont, de la fabrication de la courroie, dans au moins deux étapes de préparation, le tirant (3) est mouillé par à chaque fois un mélange global de préparation, constitué par au moins un prépolymère de polyuréthane, un réticulant, le prépolymère étant réticulé au moyen d'un butanediol, et un solvant ou un dispersant inerte, chaque mélange global de préparation remplissant au moins une partie des espaces creux du tirant, le mouillage étant associé à un séchage consécutif du tirant (3) préparé.

3. Procédé selon la revendication 2, **caractérisé en ce que** lors de chaque étape de préparation, on utilise le même mélange global de préparation ou un autre mélange global de préparation.

4. Procédé selon l'une quelconque des revendications 2 et 3, **caractérisé en ce qu'**un séchage est réalisé entre chaque étape de préparation.

5. Procédé selon l'une quelconque des revendications 1 à 4, **caractérisé en ce que** le mouillage du tirant (3) est réalisé de manière telle qu'après le séchage, au moins 20% des espaces creux du tirant sont remplis par le polymère réticulé.

6. Procédé selon l'une quelconque des revendications 1 à 5, **caractérisé en ce qu'**avant le début de la préparation du tirant (3), les composants individuels du mélange global de préparation sont d'abord dissous ou dispersés, indépendamment les uns des autres, à chaque fois dans un solvant ou un dispersant, qui peut être identique ou différent, et sont ensuite rassemblés lors du début de la préparation du tirant (3) avec formation d'un mélange global de préparation présentant encore une viscosité basse.

7. Procédé selon l'une quelconque des revendications 1 à 6, **caractérisé en ce qu'**on prépare un tirant (3) en matériau sous forme de fibres.

8. Procédé selon la revendication 7, **caractérisé en ce qu'**on prépare un tirant (3) en fibres de carbone, en fibres de verre, en fibres d'aramide ou en fibres de basalte.

9. Procédé selon la revendication 8, **caractérisé en ce qu'**on prépare un tirant (3) en fibres de carbone.

10. Utilisation d'un tirant (3) préparé, fabriqué selon l'une quelconque des revendications 1 à 9, pour la fabrication d'une courroie (1) présentant un corps de courroie en polyuréthane réticulé.

11. Utilisation d'un tirant (3) préparé, fabriqué selon l'une quelconque des revendications 1 à 9, pour la fabrication d'une courroie (1) pour la technique d'entraînement.

12. Utilisation d'un tirant (3) préparé selon la revendication 11 pour la fabrication d'une courroie dentée (1) ou d'une courroie trapézoïdale à nervures.
